# EUROPÄISCHE PATENTSCHRIFT

(11) **EP 3 631 387 B1**
(45) Veröffentlichungstag und Bekanntmachung des Hinweises auf die Patenterteilung: **11.01.2023**
(21) Anmeldenummer: 18728548.1
(22) Anmeldetag: 22.05.2018
(51) Int. Cl.: G01H 1/00, G01H 3/00, B21D 55/00, B23Q 11/00, B30B 15/26, G05B 19/00, G05B 19/042

(54) **VERFAHREN ZUM BESTIMMEN VON MATERIALEIGENSCHAFTEN EINES WERKSTÜCKS DURCH AUDIOANALYSE EINER WERKSTÜCKBEARBEITUNG SOWIE STANZMASCHINE UND COMPUTERPROGRAMMPRODUKT**
METHOD FOR DETERMINING MATERIAL PROPERTIES OF A WORKPIECE BY AUDIO ANALYSIS OF WORKPIECE MACHINING, AND PUNCHING MACHINE AND COMPUTER PROGRAM PRODUCT
PROCÉDÉ DE DÉTERMINATION DE PROPRIÉTÉS DE MATÉRIAU D'UNE PIÈCE PAR ANALYSE AUDIO D'UN USINAGE DE PIÈCE, MACHINE DE POINÇONNAGE ET PRODUIT PROGRAMME D'ORDINATEUR

(30) Priorität: 26.05.2017 DE 102017208909
(43) Veröffentlichungstag der Anmeldung: 08.04.2020
(73) Patentinhaber: TRUMPF Werkzeugmaschinen GmbH + Co. KG, 71254 Ditzingen (DE)
(72) Erfinder: BAUER, Klaus, 71254 Ditzingen (DE); BEUTTLER, Manuel, 71229 Leonberg (DE); BOCKERMANN, Uwe, 71665 Vaihingen/Enz (DE); LUKAS, Martin, 70839 Gerlingen (DE); SIDDIQUI, Zaigham Faraz, 71034 Boeblingen (DE)
(74) Vertreter: Trumpf Patentabteilung
(86) Internationale Anmeldenummer: PCT/EP2018/063314
(87) Internationale Veröffentlichungsnummer: WO 2018/215417

(56) Entgegenhaltungen:
- EP-A1- 0 215 268
- DE-A1- 4 242 442
- DE-A1- 19 837 369
- DE-A1-102007 060 278
- DE-A1-102012 100 096
- US-A- 4 023 044

## Beschreibung

Die Erfindung betrifft ein Verfahren zum Bestimmen mindestens einer Materialeigenschaft eines Werkstücks, insbesondere zum Bestimmen von Werkstückmaterial und/oder Werkstückdicke.

Die Auswahl einer passenden Technologietabelle bei der Laserbearbeitung wird bisher manuell durch den Bediener oder Programmierer vorgenommen. Die Auswahl einer solchen Technologietabelle ist abhängig vom Material des jeweils zu bearbeitenden Werkstücks. Daher muss immer darauf geachtet werden, dass die passende Technologietabelle für das momentan verwendete Werkstückmaterial eingestellt ist. Dies resultiert in Mehraufwand und potentiellen Fehlerquellen und schränkt die Flexibilität hinsichtlich einer Automatisierung der Laserbearbeitung ein.

Die Druckschrift EP 0215268 A1 beschreibt ein Verfahren und eine Vorrichtung zur augenblicklichen Feststellung von Beschädigungen und einem Verschleißzustand an Schneidwerkzeugen.

Die Druckschrift DE 19837369 A1 beschreibt eine Risserkennung beim Tiefziehen, bei welcher mit einem Körperschallsensor erzeugte Geräusche aufgenommen werden.

Die Druckschrift DE 102012100096 A1 beschreibt ein Umformwerkzeug mit Körperschallsensoren zum Bestimmen der Lage eines Risses in Blechbauteilen.

Die Druckschrift DE 4242442 A1 betrifft eine Ziehpresse, bei welcher entstehende Geräusche bei der Produktion analysiert und mit Referenzdaten verglichen werden.

Die Druckschrift DE 102007060278 A1 betrifft eine Vorrichtung und ein Verfahren für die Qualitätsprüfung von Blechteilen mit einem Schallaufnehmer und einer Auswerteeinheit, die den aufgezeichneten Schallverlauf mit einer Referenzkurve vergleicht.

Die Druckschrift US 4023044 A beschreibt ein Überwachungssystem einer Stanzpresse mit einem piezoelektrischen Beschleunigungsmesser.

Der vorliegenden Erfindung liegt daher die Aufgabe zugrunde, ein Verfahren zum Bestimmen mindestens einer Materialeigenschaft eines in einer Stanz-/Laserkombinationsmaschine angeordneten Werkstücks sowie auch eine zugehörige Stanz-/Laserkombinationsmaschine und Computerprogrammprodukt anzugeben.

Diese Aufgabe wird erfindungsgemäß gelöst durch ein Verfahren nach Anspruch 1, eine Stanz-/Laserkombinationsmaschine nach Anspruch 9 und ein Computerprogrammprodukt nach Anspruch 10.

Erfindungsgemäß kann durch eine Werkstückbearbeitung der Stanz-/Laserkombinationsmaschine, also z.B. durch Stanzen mit einem Stanzwerkzeug, Prägen mit einem Prägewerkzeug, Signieren mit einem Signierwerkzeug oder Umformen mit einem Umformwerkzeug oder durch Anklopfen mit dem Werkzeug an das Werkstück, anhand einer Audioanalyse der aufgenommenen Bearbeitungsgeräusche (Klang) oder Werkstückvibrationen erkannt werden, ob ein Werkstück des richtigen Materials in der richtigen Dicke in der Stanz-/Laserkombinationsmaschine eingelegt ist. So ändern sich beispielsweise die Sprödigkeit und die Schmelztemperatur eines Stahls in Abhängigkeit seiner Legierungsbestandteile (insbesondere seines Kohlenstoffgehalts), so dass durch Audioanalyse der Bearbeitungsgeräusche oder Werkstückvibrationen die Sprödigkeit und daraus die Schmelztemperatur und daraus das Stahlmaterial bestimmt werden können. Je nach Werkstückdicke ändern sich auch die Bearbeitungsgeräusche und Werkstückvibrationen, so dass auch die Werkstückdicke bzw. Abweichungen von der nominellen Materialdicke bestimmt werden können.

Für den Fall, dass die Bearbeitung des Werkstücks eine erste und eine nachfolgende zweite Bearbeitung umfasst, kann vorteilhaft bei der ersten Bearbeitung durch Audioanalyse der Bearbeitungsgeräusche oder Werkstückvibrationen mindestens eine für die zweite Bearbeitung relevante Materialeigenschaft des Werkstücks, Werkstückmaterial und/oder Werkstückdicke, bestimmt werden. Bevorzugt ist die erste Bearbeitung eine andere Bearbeitung als Stanzen oder Umformen und die zweite Bearbeitung eine Stanz- oder Umformbearbeitung, denn beim Stanzen und Umformen (Biegen) spielen die Materialeigenschaften eine größere Rolle als bei den anderen Bearbeitungsarten, so dass vor Stanz- oder Umformbearbeitungen die Materialeigenschaften bevorzugt durch andere Bearbeitungsarten bestimmt werden. Dadurch können bspw. schon die ersten Stanz- oder Umformbearbeitungen mit einem verbesserten Schnittspiel zwischen Ober- und Unterwerkzeug bzw. der richtigen Rückfederungskonstante durchgeführt werden.

Vorteilhaft werden mit einem ersten Stanzhub oder einer ersten Umformung alle bearbeitungsrelevanten Materialeigenschaften bestimmt und diese Information genutzt, um möglichst alle folgenden Bearbeitungen, also z.B. weitere mechanische Bearbeitungen oder Laserbearbeitungen, mit verbesserten Parametern durchführen zu können.

Vorzugsweise erfolgt das Bearbeiten des Werkstücks mit unterschiedlichen Stanzwerkzeugen der Stanz-/Laserkombinationsmaschine, um durch Audioanalyse der jeweiligen Stanzgeräusche Materialeigenschaften wie z.B. die Werkstückdicke zu bestimmen.

Besonders bevorzugt wird das Bestimmen der mindestens einen Materialeigenschaft des Werkstücks automatisiert für jedes neu in der Stanz-/Laserkombinationsmaschine angeordnete Werkstück durchgeführt, wodurch bedienerabhängige Fehlerquellen weiter reduziert werden und der Automatisierungsgrad der Bearbeitung erhöht wird.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:

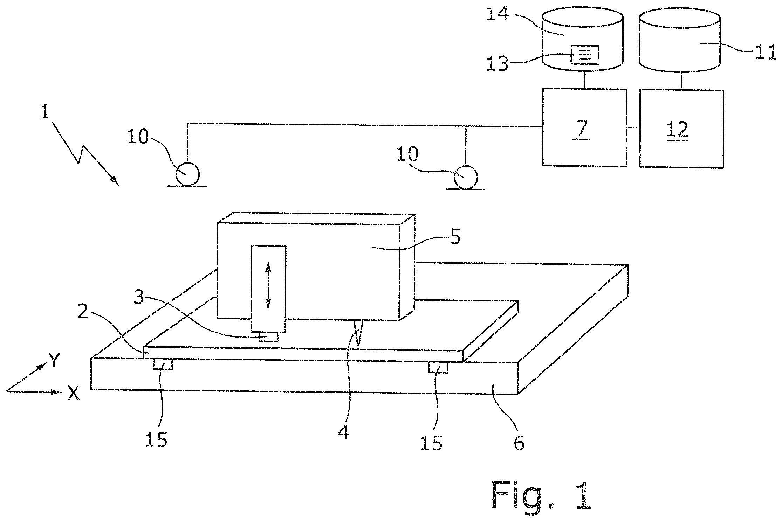

- Fig. 1: schematisch eine erfindungsgemäße Stanz-/Laserkombinationsma-schine zum Durchführen des erfindungsgemäßen Verfahrens.

Die in **Fig. 1** schematisch gezeigte Stanz-/Laserkombinationsmaschine **1** dient zum Bearbeiten eines Werkstücks (z.B. Blech) **2** mittels eines Stanzwerkzeugs **3** und eines Laserstrahls **4.** Das Stanzwerkzeug 3 ist zum Stanzen des Werkstücks 2 absenkbar in einem Bearbeitungskopf **5** der Stanz-/Laserkombinationsmaschine 1 angeordnet, aus dem auch der Laserstrahl 4 zum Laserbearbeiten des Werkstücks 2 austritt. Der Bearbeitungskopf 5 und das auf einer Werkstückauflage **6** aufliegende Werkstück 2 sind mittels nicht gezeigter Antriebe in Richtung der X- und Y-Achsen relativ zueinander bewegbar gelagert. Eine Maschinensteuerung **7** dient sowohl zum Ansteuern der Antriebe als auch zum Ansteuern des Laserstrahls 4 und der Hubbewegung des Stanzwerkzeugs 3.

Die Stanz-/Laserkombinationsmaschine 1 umfasst ferner ein oder mehrere Mikrofone **10** zur Aufnahme von Stanzgeräuschen, einen Datenspeicher **11** und eine Auswerteeinheit **12,** die mit den Mikrofonen 10 und mit dem Datenspeicher 11 verbunden ist, zum Auswerten der aufgenommenen Stanzgeräusche. Im Datenspeicher 11 sind Referenz-Stanzgeräusche gespeichert, die beim Stanzen von Referenz-Werkstücken mit bekannten Materialeigenschaften, mit bekanntem Werkstückmaterial und bekannter Werkstückdicke, aufgenommen worden sind.

Wenn ein neues Werkstück 2 für eine Laserbearbeitung in die Stanz-/Laserkombinationsmaschine 1 eingelegt ist, werden vor der Laserbearbeitung die folgenden Verfahrensschritte nacheinander automatisiert durchgeführt:
1. Durchführen einer Stanzbearbeitung an dem Werkstück 2. In den meisten Fällen wird vor der Laserbearbeitung (z.B. Laserschnitt) ohnehin eine Stanzbearbeitung durchgeführt.
2. Aufnehmen der während der Stanzbearbeitung erzeugten Stanzgeräusche mit den Mikrofonen 10.
3. Bestimmen mindestens einer Materialeigenschaft des Werkstücks 2, Werkstückmaterial und -dicke, mittels der Auswerteeinheit 12, indem die aufgenommenen Stanzgeräusche durch Audioanalyse mit den gespeicherten Referenz-Stanzgeräuschen verglichen werden.
4. Überprüfen mittels der Auswerteeinheit 12, ob ein Werkstück 2 des richtigen Materials in der richtigen Dicke eingelegt ist. Wenn das eingelegte Werkstück 2 als falsch erkannt wird, kann ein neues Werkstück 2 eingelegt werden.
5. Auswählen einer passenden Lasertechnologietabelle **13** aus einer Technologie-Datenbank **14** durch die Maschinensteuerung 7 anhand der bestimmten, mindestens einen Materialeigenschaft des Werkstücks 2 für die Laserbearbeitung des Werkstücks 2.
6. Durchführen der Laserbearbeitung des Werkstücks 2.

Vorzugsweise werden die so bestimmte(n) Materialeigenschaft(en) des Werkstücks 2 und die zugehörigen aufgenommenen Stanzgeräusche als Referenz-Stanzgeräusche im Datenspeicher 11 gespeichert, insbesondere in oder zugeordnet zur Technologietabelle 13. Vorteilhaft können die bestimmte(n) Materialeigenschaft(en) des Werkstücks 2 und die zugehörigen aufgenommenen Stanzgeräusche zum Überprüfen und gegebenenfalls zum Anpassen der Technologietabelle 13 verwendet werden. Mithilfe von maschinellem Lernen, beispielsweise unter Verwendung eines neuronalen Netzwerks, können in den Daten dann bestimmte Muster erkannt und dadurch auch bestimmte Fehlerarten identifiziert werden.

Zusätzlich zu dem bzw. den Mikrofonen 10 können auch ein oder mehrere Vibrationssensoren **15** am Werkstück 2 selbst oder integriert in der Werkstückauflage 6 angeordnet sein, welche die beim Stanzen erzeugten Werkstückvibrationen aufnehmen. Durch Vergleich der aufgenommenen Werkstückvibrationen mit Referenz-Werkstückvibrationen, die beim Stanzen von Referenz-Werkstücken mit bekannten Materialeigenschaften aufgenommen worden sind und im Datenspeicher 11 gespeichert sind, kann mindestens eine Materialeigenschaft des Werkstücks 2, Werkstückmaterial und -dicke, mittels der Auswerteeinheit 12 bestimmt werden.

Statt das Werkstück 2 zu stanzen, kann das Werkstück 2 auch mit einem Oberflächenwerkzeug geprägt werden oder zum Erzeugen von Geräuschen oder Vibrationen auch nur angestoßen werden.

## Patentansprüche

1. Verfahren zum Bestimmen mindestens einer Materialeigenschaft eines in einer Stanz-/Laserkombinationsmaschine (1) angeordneten Werkstücks (2), zum Bestimmen von Werkstückmaterial und/oder Werkstückdicke, mit folgenden Verfahrensschritten:
- Bearbeiten des Werkstücks (2) durch Ausführen mindestens einer Hubbewegung eines Werkzeugs (3) der Stanz-/Laserkombinationsmaschine (1),
- Aufnehmen der beim Bearbeiten des Werkstücks (2) erzeugten Bearbeitungsgeräusche mittels mindestens eines Mikrofons (10), und
- Bestimmen der mindestens einen Materialeigenschaft des Werkstücks (2) durch Vergleichen der aufgenommenen Bearbeitungsgeräusche mit Referenz-Bearbeitungsgeräuschen, die beim Bearbeiten von Referenz-Werkstücken mit bekannten Materialeigenschaften aufgenommen worden sind, **dadurch gekennzeichnet, dass** bei einem in der Stanz-/Laserkombinationsmaschine (1) angeordneten Werkstück (2) mindestens ein Werkstückmaterial und/oder eine Werkstückdicke, vor der Laserbearbeitung des Werkstücks (2) bestimmt wird durch Vergleichen der mit einem Werkzeug (3) der Stanz-/Laserkombinationsmaschine (1) erzeugten Bearbeitungsgeräusche mit den Referenz-Bearbeitungsgeräuschen, wobei für die Laserbearbeitung des Werkstücks (2) mindestens ein Laserbearbeitungsparameter, insbesondere eine Technologietabelle (13), anhand des bestimmten Werkstückmaterials und/oder der Werkstückdicke des Werkstücks (2) automatisiert ausgewählt oder angepasst wird.

2. Verfahren nach Anspruch 1, **dadurch gekennzeichnet, dass** das Bearbeiten des Werkstücks (2) mindestens eine der folgenden Bearbeitungsarten umfasst: Stanzen, Prägen, Signieren, Umformen des Werkstücks (2) und Anklopfen an das Werkstück (2).

3. Verfahren nach Anspruch 1 oder 2, **dadurch gekennzeichnet, dass** die Bearbeitung des Werkstücks (2) eine erste und eine nachfolgende zweite Bearbeitung umfasst und dass bei der ersten Bearbeitung mindestens eine für die zweite Bearbeitung relevante Materialeigenschaft des Werkstücks (2), Werkstückmaterial und/oder Werkstückdicke, bestimmt wird.

4. Verfahren nach Anspruch 3, **dadurch gekennzeichnet, dass** die erste Bearbeitung eine andere Bearbeitung als Stanzen oder Umformen und die zweite Bearbeitung eine Stanz- oder Umformbearbeitung ist.

5. Verfahren nach einem der vorhergehenden Ansprüche, **dadurch gekennzeichnet, dass** das Bearbeiten des Werkstücks (2) mit verschiedenen Werkzeugen (3) der Stanz-/Laserkombinationsmaschine (1) erfolgt.

6. Verfahren nach einem der vorhergehenden Ansprüche, **dadurch gekennzeichnet, dass** das Bestimmen der mindestens einen Materialeigenschaft des Werkstücks (2) automatisiert für jedes neu in der Stanz-/Laserkombinationsmaschine (1) angeordnete Werkstück (2) durchgeführt wird.

7. Verfahren nach einem der vorhergehenden Ansprüche, **dadurch gekennzeichnet, dass** die bestimmte, mindestens eine Materialeigenschaft des Werkstücks (2) zusammen mit den zugehörigen aufgenommenen Bearbeitungsgeräuschen als Referenz-Bearbeitungsgeräusche gespeichert wird, insbesondere in einer Technologietabelle (13).

8. Verfahren nach einem der vorhergehenden Ansprüche, **dadurch gekennzeichnet, dass** die bestimmte, mindestens eine Materialeigenschaft des Werkstücks (2) und die zugehörigen aufgenommenen Bearbeitungsgeräusche zum Überprüfen und gegebenenfalls zum Anpassen einer Technologietabelle (13) verwendet werden.

9. Stanz-/Laserkombinationsmaschine (1), mit einem absenkbaren Werkzeug (3) zum Bearbeiten eines Werkstücks (2), **gekennzeichnet durch**:
- mindestens ein Mikrofon (10) zur Aufnahme von bei einer Werkstückbearbeitung erzeugten Bearbeitungsgeräuschen,
- einen Datenspeicher (11) zum Speichern von Referenz-Bearbeitungsgeräuschen, die beim Bearbeiten von Referenz-Werkstücken mit bekannten Materialeigenschaften aufgenommen worden sind, und
- eine Auswerteeinheit (12), die mit dem mindestens einen Mikrofon (10) sowie mit dem Datenspeicher (11) verbunden ist, und zur Bestimmung mindestens einer Materialeigenschaft des Werkstücks (2), Werkstückmaterial und/oder Werkstückdicke, durch Vergleich der bei der Werkstückbearbeitung aufgenommenen Bearbeitungsgeräusche mit den gespeicherten Referenz-Bearbeitungsgeräuschen ausgebildet ist,
wobei bei einem in der Stanz-/Laserkombinationsmaschine (1) angeordneten Werkstück (2) mindestens ein Werkstückmaterial und/oder eine Werkstückdicke, vor der Laserbearbeitung des Werkstücks (2) bestimmt wird durch Vergleichen der mit einem Werkzeug (3) der Stanz-/Laserkombinationsmaschine (1) erzeugten Bearbeitungsgeräusche mit den Referenz-Bearbeitungsgeräuschen, wobei für die Laserbearbeitung des Werkstücks (2) mindestens ein Laserbearbeitungsparameter, insbesondere eine Technologietabelle (13), anhand des bestimmten Werkstückmaterials und/oder der Werkstückdicke des Werkstücks (2) automatisiert ausgewählt oder angepasst wird.

10. Computerprogrammprodukt, welches Codemittel aufweist, die zum Durchführen aller Schritte des Verfahrens nach einem der Ansprüche 1 bis 8 angepasst sind, wenn das Computerprogrammprodukt auf einer Steuerung (7) einer Stanz-/Laserkombinationsmaschine (1) mit einem absenkbaren Werkzeug (3) zum Bearbeiten eines Werkstücks (2), mindestens einem Mikrofon (10) zur Aufnahme von bei einer Werkstückbearbeitung erzeugten Bearbeitungsgeräuschen, einem Datenspeicher (11) zum Speichern von Referenz-Bearbeitungsgeräuschen, und einer Auswerteeinheit (12), die mit dem mindestens einen Mikrofon (10) sowie mit dem Datenspeicher (11) verbunden ist, abläuft.

## Claims

1. A method for determining at least one material property of a workpiece (2) arranged in a punching/laser combination machine (1), for determining workpiece material and/or workpiece thickness, with the following method steps:
- machining of the workpiece (2) by performing at least one lifting movement of a tool (3) of the punching/laser combination machine (1),
- recording the machining noises generated during machining of the workpiece (2) using at least one microphone (10), and
- determining the at least one material property of the workpiece (2) by comparing the recorded machining noises with reference machining noises that have been recorded during the machining of reference workpieces with known material properties, **characterised in that**, with a workpiece (2) arranged in the punching/laser combination machine (1), at least one workpiece material and/or one workpiece thickness is determined before the laser machining of the workpiece (2) by comparing the machining noises generated with a tool (3) of the punching/laser combination machine (1) with the reference machining noises, wherein, for the laser machining of the workpiece (2), at least one laser machining parameter, in particular a technology table (13), is automatically selected or adjusted based on the specific workpiece material and/or the workpiece thickness of the workpiece (2).

2. The method according to claim 1, **characterised in that** the machining of the workpiece (2) comprises at least one of the following types of machining: punching, embossing, signing, forming the workpiece (2) and knocking on the workpiece (2).

3. The method according to claim 1 or 2, **characterised in that** the machining of the workpiece (2) comprises a first and a subsequent second machining and that during the first machining at least one material property of the workpiece (2) significant to the second machining, workpiece material and/or workpiece thickness is determined.

4. The method according to claim 3, **characterised in that** the first machining is machining other than punching or forming and the second machining is punching or forming machining.

5. The method according to any one of the preceding claims, **characterised in that** the workpiece (2) is machined with different tools (3) of the punching/laser combination machine (1).

6. The method according to any one of the preceding claims, **characterised in that** the determination of the at least one material property of the workpiece (2) is carried out automatically for each workpiece (2) newly arranged in the punching/laser combination machine (1).

7. The method according to any one of the preceding claims, **characterised in that** the specific at least one material property of the workpiece (2) is stored together with the associated machining noises recorded as reference machining noises, in particular in a technology table (13).

8. The method according to any one of the preceding claims, **characterised in that** the specific at least one material property of the workpiece (2) and the associated machining noises recorded are used for checking and, if necessary, for adapting a technology table (13).

9. A punching/laser combination machine (1), with a lowerable tool (3) for machining a workpiece (2), **characterised by**:
- at least one microphone (10) for recording machining noises generated during workpiece machining,
- a data memory (11) for storing reference machining noises recorded when machining reference workpieces with known material properties, and
- an evaluation unit (12), which is connected to the at least one microphone (10) and to the data memory (11), and which is designed to determine at least one material property of the workpiece (2), workpiece material and/or workpiece thickness, by comparing the machining noises recorded during workpiece machining with the stored reference machining noises, wherein with a workpiece (2) arranged in the punching/laser combination machine (1), wherein at least one workpiece material and/or a workpiece thickness is determined before the laser machining of the workpiece (2) by comparing the machining noises with the reference machining noises generated by a tool (3) of the punching/laser combination machine (1), wherein, for the laser machining of the workpiece (2), at least one laser machining parameter, in particular a technology table (13), is automatically selected or adjusted based on the determined workpiece material and/or the workpiece thickness of the workpiece (2).

10. A computer program product which has code means which are adapted to carry out all the steps of the method according to one of claims 1 to 8 when the computer program product is run on a controller (7) of a punching/laser combination machine (1) with a lowerable tool (3) for machining a workpiece (2), at least one microphone (10) for recording machining noises generated during workpiece machining, a data memory (11) for storing reference machining noises, and an evaluation unit (12) which is equipped with the at least one microphone (10) and which is connected to the data memory (11).

## Revendications

1. Procédé de détermination d'au moins une propriété de matériau d'une pièce (2) disposée dans une machine combinée d'estampage/laser (1), pour déterminer le matériau de la pièce et/ou l'épaisseur de la pièce, comprenant les étapes de procédé suivantes :
- usinage de la pièce (2) en effectuant au moins un mouvement de soulèvement d'un outil (3) de la machine combinée d'estampage/laser (1),
- enregistrement des bruits d'usinage générés lors de l'usinage de la pièce (2) à l'aide d'au moins un microphone (10), et
- détermination de l'au moins une propriété de matériau de la pièce (2) par comparaison des bruits d'usinage enregistrés avec des bruits d'usinage de référence qui ont été enregistrés lors de l'usinage de pièces de référence ayant des propriétés de matériau connues, **caractérisé en ce que** dans une pièce (2) disposée dans la machine combinée d'estampage/laser (1), au moins un matériau de pièce et/ou une épaisseur de pièce sont déterminés avant l'usinage au laser de la pièce (2) par comparaison des bruits d'usinage générés avec un outil (3) de la machine combinée d'estampage/laser (1) avec les bruits d'usinage de référence, pour l'usinage au laser de la pièce (2), au moins un paramètre d'usinage au laser, en particulier un tableau technologique (13), étant sélectionné ou ajusté automatiquement sur la base du matériau défini de la pièce et/ou de l'épaisseur de la pièce (2) à usiner.

2. Procédé selon la revendication 1, **caractérisé en ce que** l'usinage de la pièce (2) comprend au moins l'un des types d'usinage suivants : l'estampage, le gaufrage, la signature, le formage de la pièce (2) et la frappe sur la pièce (2).

3. Procédé selon la revendication 1 ou 2, **caractérisé en ce que** l'usinage de la pièce (2) comprend un premier et un second usinage ultérieur et **en ce que**, lors du premier usinage, au moins une propriété de matériau de la pièce (2) pertinente pour le second usinage, le matériau de la pièce et/ou l'épaisseur de la pièce sont déterminés.

4. Procédé selon la revendication 3, **caractérisé en ce que** le premier usinage est un usinage autre que l'emboutissage ou le formage et le second usinage est un estampage ou le formage.

5. Procédé selon l'une quelconque des revendications précédentes, **caractérisé en ce que** la pièce (2) est usinée avec différents outils (3) de la machine combinée d'estampage/laser (1).

6. Procédé selon l'une quelconque des revendications précédentes, **caractérisé en ce que** la détermination de l'au moins une propriété de matériau de la pièce (2) est effectuée automatiquement pour chaque pièce (2) nouvellement disposée dans la machine combinée d'estampage/laser (1).

7. Procédé selon l'une quelconque des revendications précédentes, **caractérisé en ce que** l'au moins une propriété définie de matériau de la pièce (2) est stockée conjointement avec les bruits d'usinage associés enregistrés comme bruits d'usinage de référence, en particulier dans un tableau technologique (13).

8. Procédé selon l'une quelconque des revendications précédentes, **caractérisé en ce que** l'au moins une propriété définie de matériau de la pièce (2) et les bruits d'usinage associés enregistrés sont utilisés pour contrôler et, le cas échéant, ajuster un tableau technologique (13).

9. Machine combinée d'estampage/laser (1), comprenant un outil abaissable (3) pour l'usinage d'une pièce (2), **caractérisée par** :
- au moins un microphone (10) pour enregistrer les bruits d'usinage générés lors de l'usinage de la pièce,
- un magasin de données (11) pour stocker des bruits d'usinage de référence qui ont été enregistrés lors de l'usinage de pièces de référence ayant des propriétés de matériau connues, et
- une unité d'évaluation (12), qui est reliée à l'au moins un microphone (10) et au magasin de données (11), et pour déterminer au moins une propriété de matériau de la pièce (2), le matériau de la pièce et/ou l'épaisseur de la pièce, par comparaison des bruits d'usinage enregistrés pendant l'usinage de la pièce avec les bruits d'usinage de référence enregistrés, pour une pièce (2) disposée dans la machine combinée d'estampage/laser (1), au moins un matériau de pièce et/ou une épaisseur de pièce étant déterminés avant l'usinage au laser de la pièce (2) par comparaison des bruits d'usinage avec les bruits d'usinage de référence générés par un outil (3) de la machine combinée d'estampage/laser (1), pour l'usinage au laser de la pièce (2) au moins un paramètre d'usinage au laser, en particulier un tableau technologique (13), basé sur le matériau de pièce défini et/ou l'épaisseur de pièce de la pièce (2) étant sélectionné ou ajusté automatiquement.

10. Produit programme d'ordinateur comportant des moyens de codage conçus pour exécuter toutes les étapes du procédé selon l'une quelconque des revendications 1 à 8, lorsque le produit programme d'ordinateur est exécuté sur une commande (7) d'une machine combinée d'estampage/laser (1) comprenant un outil abaissable (3) pour l'usinage d'une pièce (2), au moins un microphone (10) pour enregistrer les bruits d'usinage générés lors de l'usinage d'une pièce, un magasin de données (11) pour stocker les bruits d'usinage de référence et une unité d'évaluation (12) qui est reliée à l'au moins un microphone (10) et au magasin de données (11).
